# EUROPEAN PATENT APPLICATION

(11) **EP 2 640 070 A2**
(43) Date of publication of application: **18.09.2013**
(21) Application number: 13156518.6
(22) Date of filing: 25.02.2013
(51) Int. Cl.: H04N 5/445

(54) **Display apparatus and control method thereof**

(30) Priority: 12.03.2012 KR 20120024976
(71) Applicant: Samsung Electronics Co., Ltd, Gyeonggi-do 443-742 (KR)
(72) Inventor: Kim, Jong-hyuk, Seoul (KR); Kim, Jeong-geun, Gyeonggi-do (KR); Seo, Min-suk, Seoul (KR)
(74) Representative: Brandon, Paul Laurence

(57) **Abstract**

A display apparatus and a control method thereof which receives a user's input by using a manipulation panel are provided. The display apparatus includes: an image processor which processes an image signal; a display unit which displays an image based on the processed image signal; a user input unit which includes an optical device including a light emitter, an input pad receiving a user's input, and a detector receiving an optical signal from the light emitter according to the user's input; and a controller which controls the display unit to display a user interface (UI) including a plurality of icons, wherein the optical device receives a user manipulation in multi-directions and a push direction to the input pad, and the controller controls the display unit to display the UI corresponding to a moving direction of the received user manipulation.

## Description

### BACKGROUND

### Field

Apparatuses and methods consistent with exemplary embodiments relate to a display apparatus and a control method thereof, and more particularly, to a display apparatus and a control method thereof which receives a user's input by using a manipulation panel.

### Description of the Related Art

A display apparatus processes image signals/image data transmitted by various external image supply sources or stored in the display apparatus to display an image on a display panel. For example, a display apparatus which is provided to general users includes a television (TV) or a monitor. The display apparatus which is realized as a TV processes a broadcasting signal transmitted from the outside through various image processing operations, such as decoding and scaling operations, and provides an image of a desired broadcasting channel.

A user may select a desired channel by manipulating a user input unit such as a remote controller. For example, a user selects a channel by manipulating a number key pad in the remote controller and inputting a desired channel (content) number.

A user may also select a channel by manipulating a manipulation panel of a display apparatus. Such manipulation panel generally includes a tact switch and a touch sensor.

The tact switch is contacted and released by physical pressure of a user's finger, and has a tact protruding to the outside, and therefore is less durable.

The touch sensor uses electrical features of a user's finger, and thus may not recognize a nonconductor. Further, the touch sensor is sensitive to a surrounding environment, i.e., temperature or moisture and may not normally operate.

### SUMMARY

According to an aspect of an exemplary embodiment, there is provided a display apparatus including: an image processor which processes an image signal; a display unit which displays an image thereon based on the processed image signal; a user input unit which includes an optical device including a light emitter, an input pad receiving a user's input, and a detector receiving an optical signal from the light emitter according to the received user's input to the input pad; and a controller which controls the display unit to display thereon a user interface (UI) including a plurality of icons, wherein the optical device receives a user's manipulation in multi-directions and a push direction to the input pad, and the controller controls the display unit to display thereon the UI corresponding to a moving direction of the received user's manipulation.

The optical device may be provided in the display apparatus and the user's manipulation in the multi-directions may include a user's manipulation in up, down, left, right and diagonal directions.

The optical device may receive a user's selection of one of the plurality of icons according to a user's manipulation in the push direction to a predetermined icon.

The plurality of icons may correspond to a menu of the display apparatus, and the controller may control the display unit to display thereon a sub-menu of a predetermined menu if an icon corresponding to the predetermined menu is selected from the plurality of icons.

The light emitter may include a light source emitting an infrared ray or a laser, and the detector may include an optical sensor which reads a value of the received optical signal and senses the moving direction of the user's manipulation to the input pad.

The light emitter and the detector may be provided toward a rear surface of the input pad.

The optical device may further include a reflection panel which is provided in a rear surface of the input pad and changes a quantity of light transmitted from the light emitter to the detector according to the user's manipulation to the input pad.

According to an aspect of another exemplary embodiment, there is provided a control method of a display apparatus, the control method including: displaying a user interface (UI) including a plurality of icons; receiving a user's manipulation in multi-directions and a push direction to an input pad of an optical device; and displaying the UI corresponding to a moving direction of the received user's manipulation, wherein the optical device includes a light emitter, the input pad receiving a user's input, and a detector receiving an optical signal from the light emitter according to the received user's input to the input pad.

The optical device may be provided in the display apparatus and the user's manipulation in the multi-directions may include a user's manipulation in up, down, left, right and diagonal directions.

The control method may further include receiving a user's selection of one of the plurality of icons according to a user's manipulation in the push direction with respect to a predetermined icon.

The plurality of icons may correspond to a menu of the display apparatus, and the control method may further include displaying a sub-menu of a predetermined menu if an icon corresponding to the predetermined menu is selected from the plurality of icons.

The light emitter may include a light source emitting an infrared ray or a laser, the detector may include an optical sensor, and the receiving the user's manipulation may include reading a value of the received optical signal and sensing the moving direction of the user's manipulation to the input pad by the optical sensor.

The light emitter and the detector may be provided toward a rear surface of the input pad.

The optical device may further include a reflection panel which is provided in a rear surface of the input pad, and the receiving the user's manipulation may further include changing a quantity of light transmitted from the light emitter to the detector according to the user's manipulation to the input pad through the reflection panel.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram of a display apparatus according to an exemplary embodiment;
FIG. 2 is an example of an optical device that is installed in a display apparatus according to an exemplary embodiment;
FIG. 3 is a sectional view showing a structure of an optical device of a display apparatus according to an exemplary embodiment;
FIG. 4 illustrates a screen displayed on a display unit of a display apparatus according to an exemplary embodiment;
FIGS. 5 to 7 illustrate a user interface (UI) which is displayed corresponding to a selection of an optical device according to an exemplary embodiment; and
FIG. 8 is a flowchart showing a control method of a display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. Exemplary embodiments may be embodied in various forms without being limited to the exemplary embodiments set forth herein. Descriptions of well-known parts are omitted for clarity, and like reference numerals refer to like elements throughout.

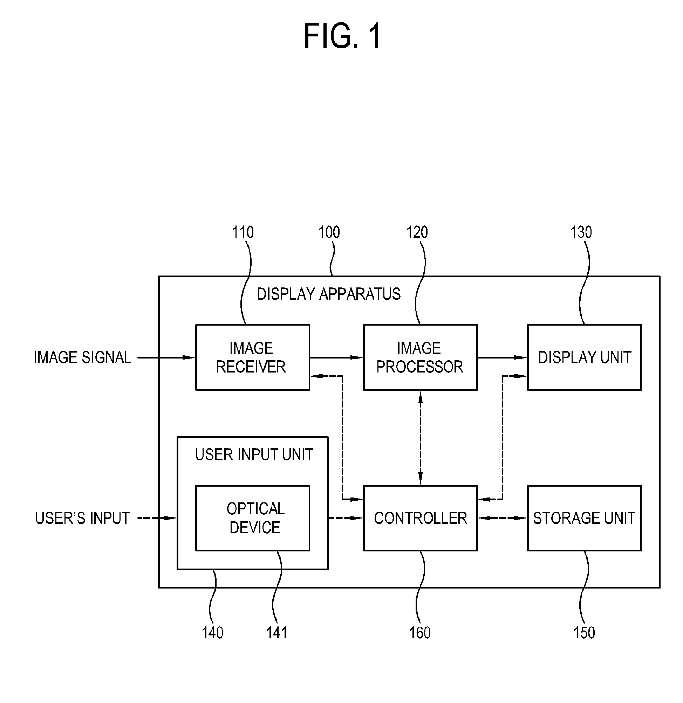

FIG. 1 is a block diagram of a display apparatus 100 according to an exemplary embodiment.

As shown therein, the display apparatus 100 processes an image signal supplied by an external image supply source (not shown) according to a preset image processing operation, and displays an image based on the processed image signal.

The display apparatus 100 according to the present exemplary embodiment may include a TV which displays a broadcasting image based on at least one of broadcasting signals, broadcasting information, and broadcasting data transmitted by a transmission device of a broadcasting station. However, it is understood that in one or more other exemplary embodiments, the display apparatus 100 may apply to various other devices which process and display an image, in addition to the TV. For example, the display apparatus 100 may include a monitor.

The display apparatus 100 may display other images as well as a broadcasting image. For example, the display apparatus 100 may display video, still images, applications, and on-screen display (OSD) images based on at least one of signals/data supplied by various image supply sources, a graphic user interface (GUI) for controlling various operations, etc.

As shown in FIG. 1, the display apparatus 100 includes an image receiver 110 which receives an image signal; an image processor 120 which processes an image signal received by the image receiver 110; a display unit 130 which displays an image thereon based on the image signal processed by the image processor 120; a user input unit 140 which receives a user's input; a storage unit 150 which stores therein various data; and a controller 160 which controls the display apparatus 100.

The image receiver 110 transmits an image signal to the image processor 120. The image receiver 110 may vary depending on a standard of a received image signal and the embodiment type of the display apparatus 100. For example, the image receiver 110 may receive a radio frequency (RF) signal in a wireless manner from a broadcasting station (not shown), or image signals according to at least one of standards such as composite video, component video, super video, Syndicat des Constructeurs d'Appareils Radiorécepteurs et Téléviseurs (SCART), high definition multimedia interface (HDMI), etc. The image receiver 110 may include a tuner to tune a broadcasting signal by channel if the image signal includes a broadcasting signal.

The image signal may be input from the outside, e.g., from an external device such as a personal computer (PC), audio/video (AV) device, digital camera, smart phone, smart pad, etc. The image signal may be data which is received through a network such as the Internet. In this case, the display apparatus 100 may further include a network communication unit (not shown) which communicates through a network. The image signal may be data stored in a non-volatile storage unit 150 such as a flash memory, a hard disc drive, etc. The storage unit 150 may be provided internally or externally with respect to the display apparatus 100. If the storage unit 150 is provided externally to the display apparatus 100, the display apparatus 100 may further include a connector (not shown) to which the storage unit 150 is connected.

The image processor 120 may perform preset various image processing operations with respect to an image signal. The image processor 120 outputs the processed image signal to the display unit 130 to display an image on the display unit 130 based on the image signal.

The image processing operations of the image processor 120 may include at least one of a decoding operation corresponding to various image formats, a de-interlacing operation, a frame refresh rate conversion operation, a scaling operation, a noise reduction operation to improve an image quality, a detail enhancement operation, a line scanning operation, etc. The image processor 120 may be realized as a group of individual elements which may individually perform the foregoing operations, a system-on-chip (SoC) which integrates such operations, etc.

The display unit 130 displays thereon an image based on an image signal processed by the image processor 120. The display unit 130 may include liquid crystal, plasma, light-emitting diode, organic light-emitting diode, surface-conduction electron-emitter, carbon nano-tube, nano-crystal, etc.

The display unit 130 may further include additional elements depending on its embodiment type. For example, if the display unit 130 includes liquid crystal, the display unit 130 may further include a liquid crystal display (LCD) panel (not shown), a backlight unit (not shown) emitting light to the LCD panel, and a panel driving substrate (not shown) driving the LCD panel.

The user input unit 140 transmits preset various control commands and information to the controller 160 by a user's manipulation and input. By way of example, the user input unit 140 may be provided on an external side of the display apparatus 100 or may be realized as a remote controller that is separated from the display apparatus 100. If the user input unit 140 includes a remote controller, there is no restriction in transmitting a user's input from the user input unit 140 to the controller 160, and a wireless communication may be used. The wireless communication includes infrared communication, RF communication, etc. In this case, the display apparatus 100 may further include a communication module (not shown) which receives a signal corresponding to a user's input from the user input unit 140 and transmits the signal to the controller 160.

According to the present exemplary embodiment, the user input unit 140 which is installed in the external side of the display apparatus 100 includes an optical device 141.

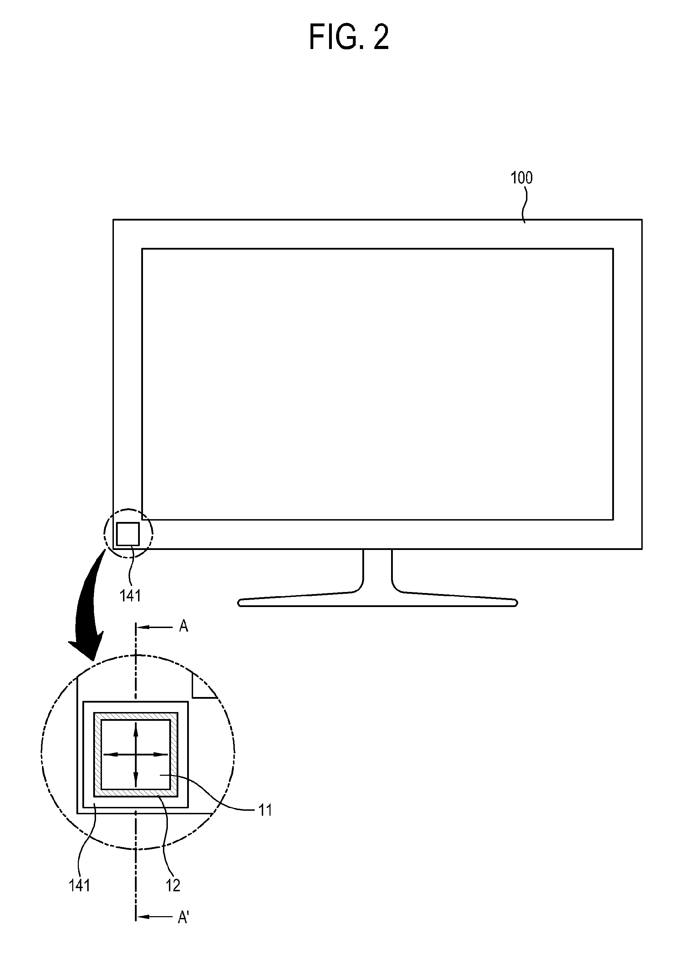

FIG. 2 is an example of an optical device 141 that is installed in a display apparatus 100 according to an exemplary embodiment.

In FIG. 2, the optical device 141 is provided on a front surface of the display apparatus 100, though it is understood that one or more other exemplary embodiments are not limited thereto, and the optical device 141 may be otherwise provided in a rear, upper, lower, or lateral side of the display apparatus 100. In FIG. 2, the optical device 141 is provided in a lateral lower side in the front surface of the display apparatus 100. Alternatively, the optical device 141 may be installed in other various locations.

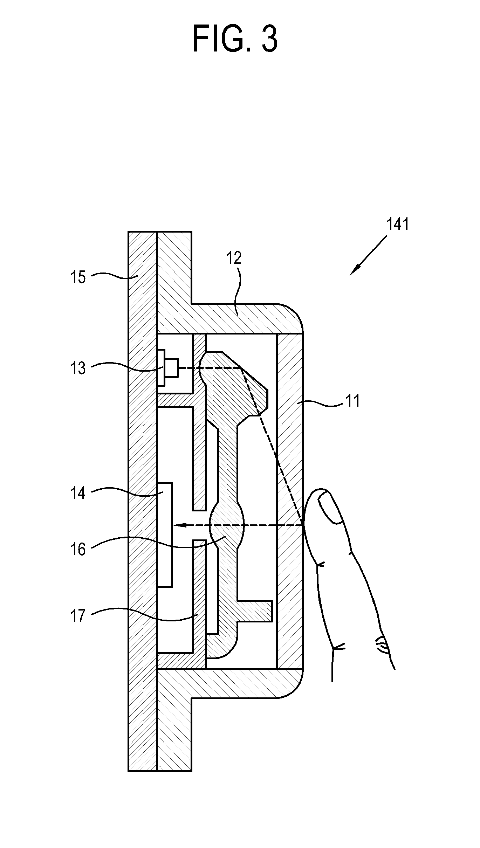

FIG. 3 is a sectional view showing a structure of an optical device 141 of a display apparatus 100 according to an exemplary embodiment.

As shown therein, the optical device 141 includes an input pad 11, a supporter 12, a light emitter 13, a detector 14, a substrate 15, a reflection panel 16 and a shield 17.

The input pad 11 receives a user's input. The optical device 141 recognizes a user's manipulation in multi-directions and a push direction with respect to the input pad 11.

The user's manipulation in multi-directions includes a user's manipulation in up, down, left, right, and diagonal directions in an input area of the input panel 11. The diagonal direction includes a diagonal direction at various angles (e.g., 10°, 45°, 80°, 130°, 260°, etc.) and a user's manipulation in a curved line as well as in a straight line. The user's manipulation in the push direction corresponds to click, multi-click (including double click), enter, push and hold from the input pad 11 to the substrate 15.

The supporter 12 is installed in the substrate 15 and supports the input pad 11.

The light emitter 13 includes a light source emitting a light, e.g., infrared ray, laser, etc.

The detector 14 receives an optical signal from the light emitter 14 according to a user's input to the input pad 11. The detector 14 includes an optical sensor which reads a value of the received optical signal (angle, etc.) and senses a moving direction of the user's manipulation with respect to the input pad 11. As shown in FIG. 3, the light emitter 13 and the detector 14 according to the present exemplary embodiment are located toward a rear surface of the input pad 11, and an optical signal from the light emitter 13 is reflected according to a user's input to the input pad 11 and transmitted to the detector 14.

In FIG. 3, there is one light emitter 13 and one detector 14. However, the optical device 141 according to one or more other exemplary embodiments may include a plurality of light emitters 13, a plurality of detectors 14, or a plurality of both light emitters 13 and detectors 14.

The substrate 15 has elements provided therein, and may include, e.g., a printed circuit board (PCB). A switch (not shown) is provided in the substrate 15 to recognize a user's manipulation in the push direction.

The reflection panel 16 is provided in a rear surface of the input pad 11, and changes the quantity of light transmitted from the light emitter 13 to the detector 14 according to a user's manipulation to the input pad 11. The reflection panel 16 according to the present exemplary embodiment includes a lens or a prism, and may have a convex shape as in FIG. 3 to change the quantity of light of the optical signal which has been transmitted through the reflection panel 16, according to a user's manipulation. The reflection panel 16 according to the present exemplary embodiment is designed to change the quantity of light according to a user's manipulation, and changes in thickness like a concave shape as well as a convex shape.

In the exemplary embodiment shown in FIG. 3, detection of a user's input by changing the quantity of light with the reflection panel 16 is described as an example. However, the optical device 141 according to one or more other exemplary embodiments is not limited to the foregoing example, and may include the cases where a brightness of a rear surface of the input panel 20 is changed (e.g., becomes brighter or darker from the center to the outside), or a groove which becomes wider or narrower from the center to the outside is provided in a rear surface of the input panel 20.

The shield 17 is provided between the reflection panel 16, the light emitter 13 and the detector 14. A through hole may be formed in the shield 17 to transmit a reflected optical signal to the detector 14.

The user input unit 140 of the display apparatus 100 may employ the optical device 141 which recognizes a user's manipulation in multi-directions to the input pad 11, and usability may improve compared to a related art technology which uses a tact switch that is less durable or a touch sensor that is sensitive to the surrounding environment.

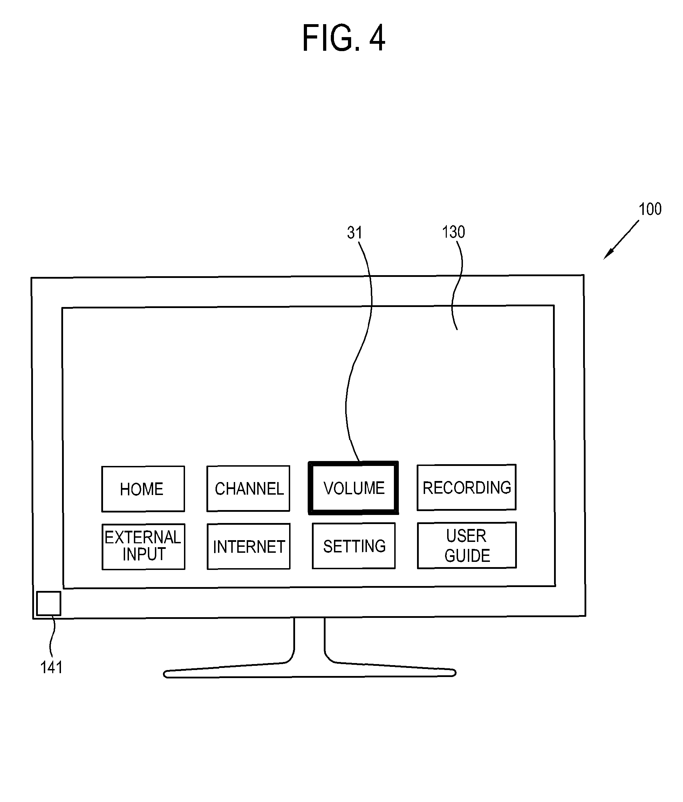

The user input unit 140 may include a user interface (UI) (or a status display window) displayed on the display unit 130 for a user's selection. The UI according to the present exemplary embodiment includes a plurality of icons 31, 32, 33, 41 and 42 shown in FIGS. 4 to 7. If the display unit 130 includes a touch screen, the user input unit 140 may transmit to the controller 160 a command corresponding to a user's input that is received by touching the UI of the display unit 130 by a user.

A user may manipulate the optical device 141 and select the UI displayed on the display unit 130. According to the present exemplary embodiment, a user manipulates the optical device 141 as the user input unit 140 and selects a UI displayed on the display unit 130. However, it is understood that one or more other exemplary embodiments are not limited to the foregoing case, and a user may manipulate a remote controller other than the optical device 141 or may manipulate an optical device according to an exemplary embodiment located on the remote controller.

The storage unit 150 stores therein data according to a control of the controller 160. The storage unit 150 may include a non-volatile storage medium such as a flash memory and a hard disc drive. The storage unit 150 is accessed by the controller 160, and data is read, recorded, modified, deleted, updated, etc., by the controller 160.

The data stored in the storage unit 150 may include, e.g., an operating system for driving the display apparatus 100, and other various applications, image data and additional data which are executed in the operating system.

The storage unit 150 according to the present exemplary embodiment further stores therein coordinates information and angle information to recognize a user's input in multi-directions to the input pad 11 by the optical device 141.

The controller 160 performs control operations for various elements of the display apparatus 100. For example, the controller 160 controls operations of the display apparatus 100 by controlling the image processor 120 to process an image and performing a corresponding control operation to a command of the user input unit 140.

More specifically, referring to FIGS. 4 to 7, the controller 160 controls the display unit 130 to display thereon a UI including a plurality of icons 31, 32, 33, 41 and 42.

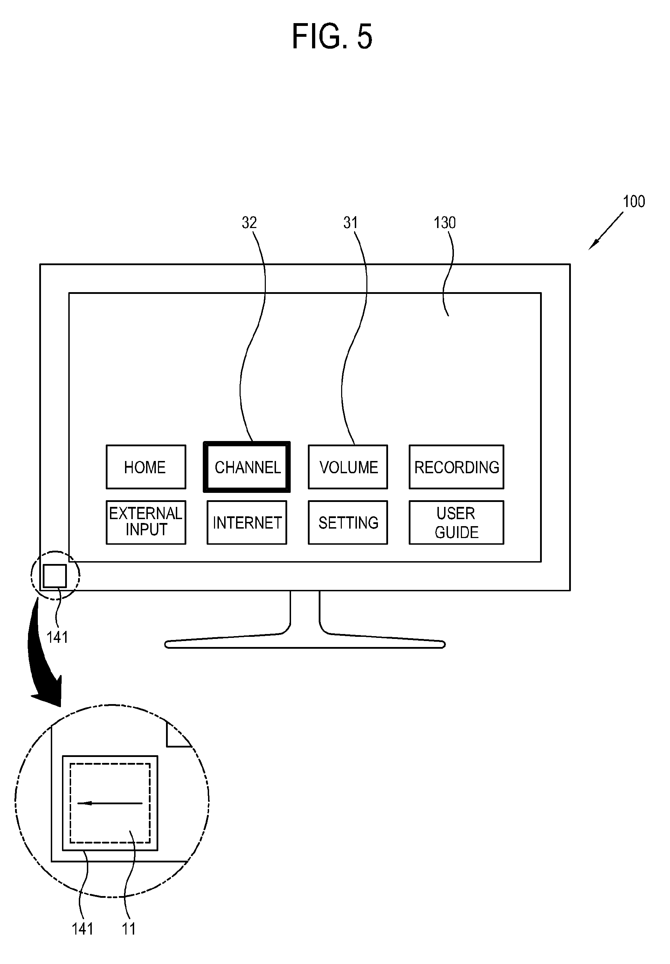

FIG. 4 illustrates a screen displayed on the display unit 130 of the display apparatus 100 according to an exemplary embodiment. FIGS. 5 to 7 illustrate a user interface (UI) which is displayed corresponding to a selection of the optical device 141.

The UI is displayed in a predetermined location of the display unit 130. In the present exemplary embodiment, the UI is provided on a lower portion of the display unit 130 around the optical device 141 so that a user may manipulate the optical device 141 while checking the UI, improving a user's convenience. However, it is understood that the UI is not limited to the lower portion of the display unit 130, and may be displayed in any area of the display unit. The plurality of icons 31, 32, 33, 41 and 42 may include at least one of a text, a graph, etc.

The plurality of icons 31, 32 and 33 included in the UI shown in FIG. 4 corresponds to an initial menu (top menu) of the display apparatus 100, and displays each menu by category. The controller 160 may display the initial menu as in FIG. 4 on the display unit 130 if a user's initial input to the input pad 11 of the optical device 141 is detected.

The controller 160 controls the display unit 130 to highlight a current selected icon (e.g., channel icon) 32 in the UI as in FIG. 4. The controller 160 may control the display unit 130 to distinguish the selected icon 32, e.g., with a highlight, a pointer, a cursor, a flicker, etc.. A user may easily recognize that the distinguished (e.g., highlighted) icon 32 in the UI is the currently selected icon.

Upon receiving a user's manipulation to the input pad 11 of the optical device 141, the controller 160 controls the display unit 130 to display thereon a UI corresponding to a moving direction of the received user's manipulation. More specifically, upon receiving a user's input in multi-directions to the input pad 11, the controller 160 calculates an angle of the received input and controls the display unit 130 to display thereon a UI corresponding to a moving direction of the calculated angle.

For example, if a volume icon 31 is displayed as a selected icon as in FIG. 4, a user may input a user's manipulation in a left direction to the input pad 11 of the optical device 141 as shown in FIG. 5.

Corresponding to the input user's manipulation as in FIG. 5, the controller 160 controls the display unit 130 to change the selected icon to a channel icon 32 provided to the left side of the volume icon 31.

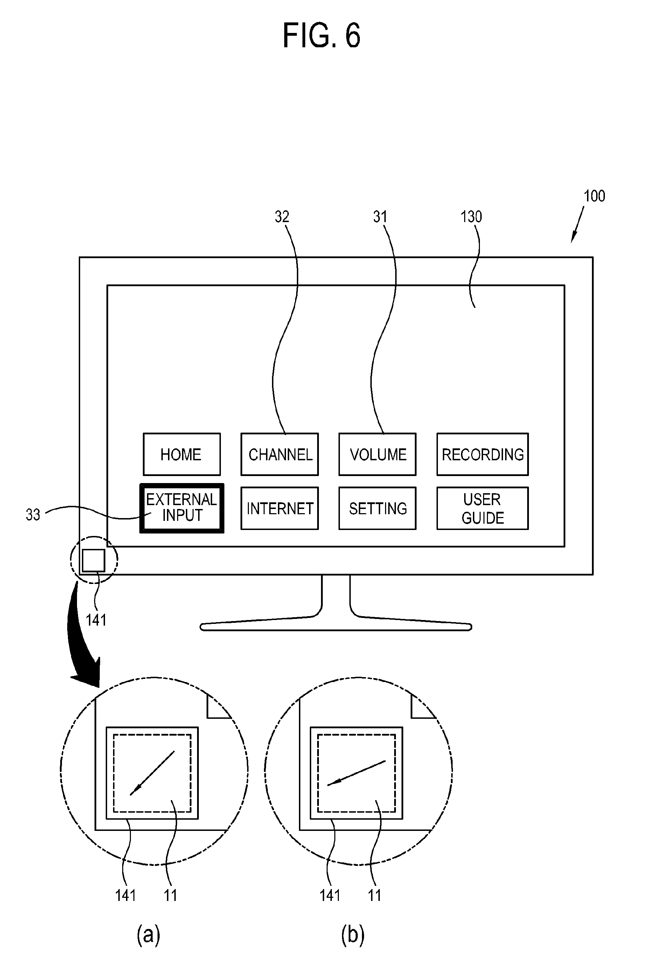

Likewise, if the channel icon 32 is displayed as a selected icon as in FIG. 5, a user may input a user's manipulation in a diagonal direction toward a left lower side with respect to the input pad 11 of the optical device 141 as shown in FIG. 6.

Corresponding to the user's manipulation input as in (a) in FIG. 6, the controller 160 controls the display unit 130 to change an external input icon 33 provided in a left lower side of the channel icon 32 to a selected icon.

The optical device 141 according to the present exemplary embodiment may detect a user's manipulation in a diagonal direction at various angles, and a user may perform a user's input to the input pad 11 to change the selected icon to the external input icon 33 as in (b) in FIG. 6.

A user may intuitively confirm the manipulation to the optical device 141 through the UI, and thus user's convenience to the optical device 141 may improve.

The optical device 141 receives a user's selection of a particular icon 32 of the plurality of icons according to a user's manipulation in a push direction with respect to an icon (e.g., channel icon 32) corresponding to a predetermined menu.

If the particular icon 32 is selected from the plurality of icons, the controller 160 controls the display unit 130 to display thereon a sub-menu of the menu corresponding to the selected icon 32 or to perform an operation corresponding to the selected icon 32.

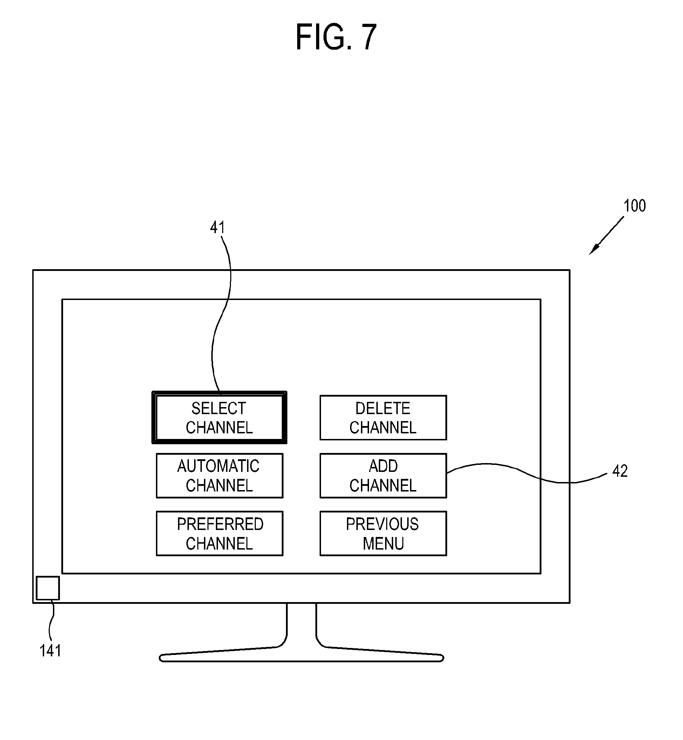

For example, if a user's manipulation in a push direction is received while the channel icon 32 is highlighted as a selected icon, the controller 160 controls the display unit 130 to display thereon a plurality of icons 41 and 42 as sub-menus of the channel menu as shown in FIG. 7.

When the icons 41 and 42 of the channel menu are displayed as in FIG. 7, a user may move to or select a desired icon by inputting a user's manipulation in multi-directions and a push direction to the input pad 11 of the optical device 141, and the controller 160 controls the display unit 130 to display thereon the foregoing through the UI.

Hereinafter, a control method of a display apparatus 100 according to an exemplary embodiment will be described with reference to accompanying drawings.

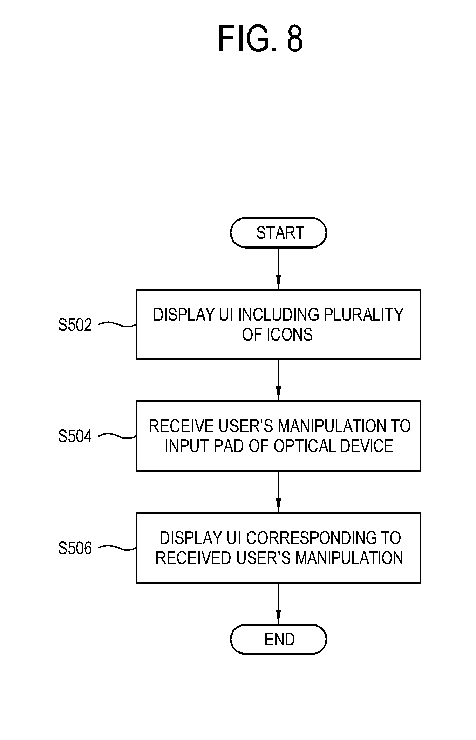

FIG. 8 is a flowchart showing a control method of a display apparatus 100 according to an exemplary embodiment.

As shown therein, the display apparatus 100 may display on the display unit 130 a UI including a plurality of icons (operation S502).

While the plurality of icons is displayed, the controller 160 may receive a user's manipulation to the input pad 11 of the optical device 141 (operation S504). The optical device 141 as the user input unit 140 may be provided in a front surface of the display apparatus 100, and receives a user's input in multi-directions and a push direction. The optical sensor of the detector 14 reads a value of an optical signal reflected according to a user's manipulation to the input pad 11 and received from the light emitter 13, i.e., a light source, and detects a moving direction of the user's input, and the received optical signal may change in the quantity of light according to a user's manipulation to the input pad 11 through the reflection panel 16.

The controller 160 controls the display unit 130 to display thereon a UI at operation S502 corresponding to the user's manipulation which has been received at operation S504 (operation S506).

According to one or more exemplary embodiments, the UI is displayed and a menu is selected by using the optical device 141. As the UI according to exemplary embodiments may vary, a channel number may be input through the optical device 141 by displaying a number key pad for selection of a channel number, or a letter is input by displaying a letter key pad and the result may be displayed as a UI.

According to one or more exemplary embodiments, the user input unit 140 of the display apparatus 100 employs the optical device 141 which recognizes a user's manipulation in multi-directions and a push direction to the input pad 11, and usability may improve compared to a related art technology which uses a tact switch that is less durable or a touch sensor that is sensitive to surrounding environment.

A user may intuitively confirm the manipulation to the optical device 141, through the UI, and thus user's convenience for the optical device 141 may improve.

While the above-described exemplary embodiments relate to an optical device 141 provided on a display apparatus 100, it is understood that other exemplary embodiments are not limited thereto. For example, according to other exemplary embodiments, the optical device 141 may be provided on a remote controller or may be provided on an image processing apparatus such as a set-top box, a stand-alone control device, an audio/video receiver, an optical media player, an image source, etc.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units or elements of the above-described apparatuses may include a processor or microprocessor executing a computer program stored in a computer-readable medium.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A display apparatus comprising:
an image processor which processes an image signal;
a display unit which displays an image thereon based on the processed image signal;
a user input unit which comprises an optical device comprising a light emitter, an input pad receiving a user's input, and a detector receiving the optical signal from the light emitter according to the user's input to the input pad; and
a controller which controls the display unit to display thereon a user interface (UI) comprising a plurality of icons,
wherein the optical device receives a user's manipulation in multi-directions and a push direction to the input pad, and the controller controls the display unit to display thereon the UI corresponding to a moving direction of the received user's manipulation.

2. The display apparatus according to claim 1, wherein the optical device is provided in the display apparatus and the user's manipulation in the multi-directions comprises a user's manipulation in an up direction, a down direction, a left direction, a right direction, and a diagonal direction.

3. The display apparatus according to claim 1, wherein the optical device receives a user's selection of an icon among the plurality of icons according to a user's manipulation in the push direction to the icon.

4. The display apparatus according to claim 3, wherein the plurality of icons corresponds to a menu of the display apparatus, and the controller controls the display unit to display thereon a sub-menu of a predetermined menu if an icon corresponding to the predetermined menu is selected from the plurality of icons.

5. The display apparatus according to one of claims 1 to 4, wherein the light emitter comprises a light source which emits an infrared ray or a laser.

6. The display apparatus according to one of claims 1 to 4, wherein:
the detector comprises an optical sensor which obtains a value of the received optical signal; and
the controller senses the moving direction of the received user manipulation according to the obtained value.

7. The display apparatus according to claim 6, wherein the light emitter and the detector are installed toward a rear surface of the input pad.

8. The display apparatus according to claim 7, wherein the optical device further comprises a reflection panel which is installed in a rear surface of the input pad and changes a quantity of light transmitted from the light emitter to the detector according to the user's manipulation to the input pad.

9. A control method of a display apparatus, the control method comprising:
displaying a user interface (UI) comprising a plurality of icons;
receiving a user's manipulation in multi-directions and a push direction to an input pad of an optical device; and
displaying the UI corresponding to a moving direction of the received user's manipulation,
wherein the optical device comprises a light emitter, the input pad receiving a user's input, and a detector receiving an optical signal from the light emitter according to the received user's input to the input pad.

10. The control method according to claim 9, wherein the optical device is provided in the display apparatus and the user's manipulation in the multi-directions comprises a user's manipulation in an up direction, a down direction, a left direction, a right direction, and a diagonal direction.

11. The control method according to claim 9, further comprising receiving a user's selection of an icon among the plurality of icons according to a user's manipulation in the push direction with respect to the icon.

12. The control method according to claim 11, wherein the plurality of icons corresponds to a menu of the display apparatus, and further comprising displaying a sub-menu of a predetermined menu if an icon corresponding to the predetermined menu is selected from the plurality of icons.

13. The control method according to one of claims 9 to 12, wherein the light emitter comprises a light source emitting an infrared ray or a laser, the detector comprises an optical sensor, and the receiving the user's manipulation comprises reading a value of the received optical signal and sensing the moving direction of the user's manipulation to the input pad by the optical sensor.

14. The control method according to claim 13, wherein the light emitter and the detector are installed toward a rear surface of the input pad.

15. The control method according to claim 14, wherein the optical device further comprises a reflection panel which is installed in a rear surface of the input pad, and the receiving the user's manipulation further comprises changing a quantity of light transmitted from the light emitter to the detector according to the user's manipulation to the input pad through the reflection panel.
